# EUROPEAN PATENT APPLICATION

(11) **EP 1 674 594 A1**
(43) Date of publication of application: **28.06.2006**
(21) Application number: 05257784.8
(22) Date of filing: 16.12.2005
(51) Int. Cl.: C23C 24/04

(54) **Blade platform restoration using cold spray**

(30) Priority: 22.12.2004 US 20799
(71) Applicant: UNITED TECHNOLOGIES CORPORATION, Hartford, CT 06101 (US)
(72) Inventor: DeBiccari, Andrew, North Branford CT 06471 (US); Haynes, Jeffrey D., Stuart FL 33496 (US)
(74) Representative: Leckey, David Herbert

(57) **Abstract**

A process for restoring a worn edge (106) of a component used in an engine is provided. The process comprises providing a component with a worn edge (106), and depositing at least one layer of powder metal material onto the worn edge (106) using a non-oxidizing carrier gas so that the powder metal material plastically deforms without melting and bonds to the worn edge (106) upon impact with the worn edge (106).

## Description

### BACKGROUND OF THE INVENTION

### (1) Field of the Invention

The present invention relates to a process for restoring platform portions of a component, such as a turbine blade, used in an engine, such as a gas turbine engine.

### (2) Prior Art

During operation, airfoil platform edges on blades used in gas turbine engines can get worn down through erosion or other means. This may lead to decreased engine efficiencies due to gas path leakage. It often becomes necessary to restore these parts to their original dimensions. Due to the proximity of blade fillets to the platform edge, conventional fusion welding cannot be used for edge restoration because the heat affected zone would extend into the high stress fillet region.

Cold gas dynamic spraying or "cold spray" has been recently introduced as a new metallization spray technique to deposit powder metal with or without inclusions onto a substrate. A supersonic jet of helium and/or nitrogen is formed by a converging/diverging nozzle and is used to accelerate the powder particles toward the substrate to produce cold spray deposits or coatings. Deposits adhere to the substrate and previously deposited layers through plastic deformation and bonding. U.S. Patent Nos. 5,302,414 and 6,502,767 illustrate cold gas dynamic spraying techniques.

### SUMMARY OF THE INVENTION

Accordingly, it is an object of the present invention to provide a process for restoring airfoil platform edges on components used in engines.

It is a further object of the present invention to provide a restoration process as above which does not impact the integrity of a fillet on the component.

The foregoing objects may be attained using the process of the present invention.

In accordance with the present invention, a process for restoring a component used in an engine is provided. The process broadly comprises providing a component with a worn edge to be restored, and depositing at least one layer of powder metal material onto the worn edge using a non-oxidizing carrier gas so that the powder metal material plastically deforms without melting and bonds to the worn edge upon impact with the worn edge.

Other details of the blade platform restoration using cold spray of the present invention are set forth in the following detailed description and the accompanying drawings wherein like reference numerals depict like elements.

### BRIEF DESCRIPTION OF THE DRAWINGS

FIG. 1 is a photograph showing typical wear on a platform edge of a blade used in a turbine engine;
FIG. 2 is a schematic representation of an apparatus for depositing cold sprayed powder metal materials onto a the platform edge of a blade used in a turbine engine; and
FIG. 3 is a photograph showing a cold spray build-up on an edge of a test specimen using the cold spray process of the present invention.

### DETAILED DESCRIPTION OF THE PREFERRED EMBODIMENT(S)

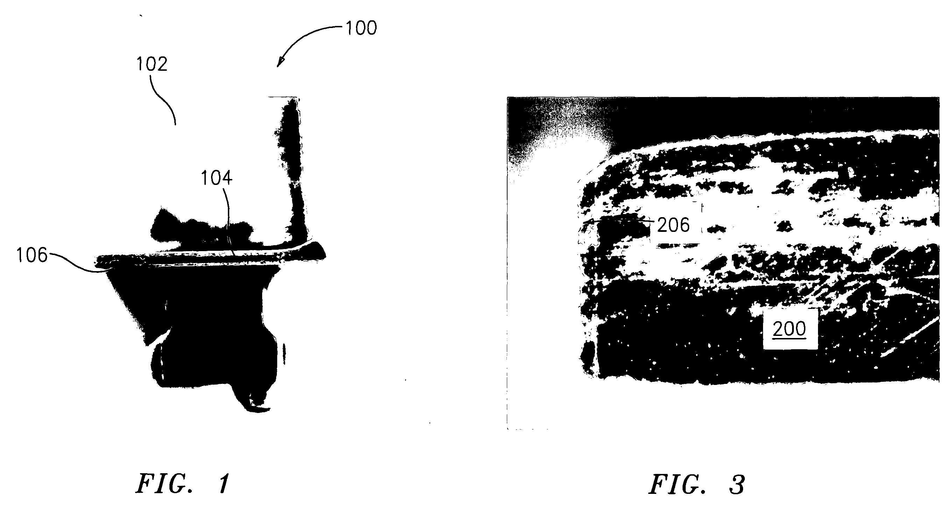

Referring now to FIG. 1, a component 100, such as a turbine blade, used in an engine, such as a gas turbine engine, has an airfoil portion 102 and a platform 104. As discussed above, in operation, an edge 106 of the platform typically wears and needs to be restored. The present invention relates to a process for restoring a blade platform using a cold spray technique.

The cold spray process for depositing powder metal materials onto portions of a component which needs to be restored is advantageous in that it provides sufficient energy to accelerate particles to high enough velocities such that, upon impact, the particles plastically deform and bond to the surface of the component being restored or onto a previously deposited layer. The cold spray process allows the build up of a relative dense coating or structural deposit. Cold spray does not metallurgically transform the sprayed particles from their original state.

When repairing or restoring a component used in an engine, it is desirable to first remove any corrosion pits and/or damaged areas from the portion of the component to be restored. The removal of the corrosion pits and/or damaged areas may be done mechanically through grinding, machining, or other applicable techniques. If desired, the surface to be repaired may be grit blasted, then a deposit made using the cold spray method.

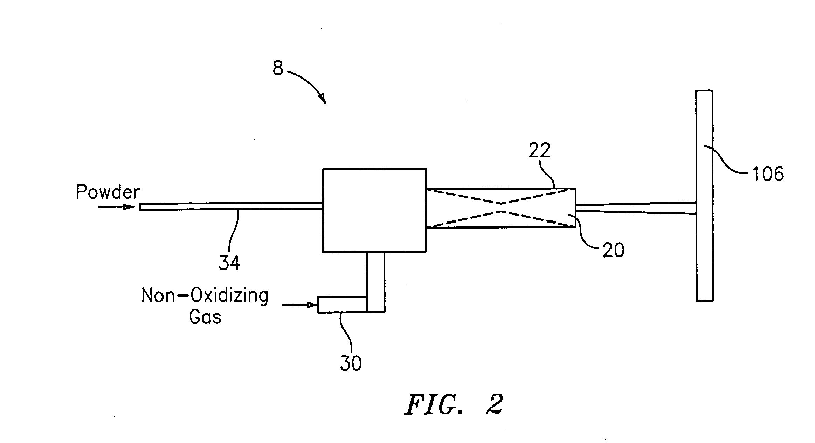

Referring now to FIG. 2, there is shown a system 8 for depositing a powder metal material onto the platform edge 106 of a component 100 being restored. The system 8 includes a spray gun 22 having a converging/diverging nozzle 20 through which the powder metal material is sprayed onto the edge 106. The component 100 may be formed from any suitable metallic material known in the art. During the cold spray deposition process, the component 100 and/or components of the spray system 8 may be held stationary or may be articulated, rotated, or translated by any suitable means (not shown) known in the art.

In the process of the present invention, the material to be deposited is a powdered metal material. The powdered metal material may be of the same composition as the component 100 is made from or may be a composition compatible with the material forming the component 100 which improves wear and/or ductility. For example, the powder metal material may be a nickel based alloy such as IN 718, IN 625, IN 100, WASPALOY, IN 939, or GATORIZED WASPALOY.

The powdered metal materials that are used to form the deposit on the edge 106 preferably have a diameter in the range of from about 5.0 microns to 50 microns (0.2 mils to 2.0 mils). Smaller particle sizes enable the achievement of higher particle velocities. Below 5 microns in diameter, the particles risk getting swept away from the edge 106 due to a bow shock layer above the surface 24, i.e. insufficient mass to propel the particle through the bow shock. The narrower the particle size distribution, the more uniform the particle velocity will be. This is because the smaller particles in the spray/plume will hit the slower, larger ones and effectively reduce the velocity of both.

The particles to be deposited may be accelerated to supersonic velocities using compressed gas, such as a gas selected from the group consisting of helium, nitrogen, another inert gas, and mixtures thereof. Helium is a preferred gas because it produces the highest velocity due to its low molecular weight.

The bonding mechanism employed by the process of the present invention for transforming the powdered metal material into a deposit is strictly solid state, meaning that the particles plastically deform but do not melt. Any oxide layer that is formed on the particles, or is present on the edge 106, or is present in a previously deposited layer, is broken up and fresh metal-to-metal contact is made at very high pressures.

The powdered metal material used to form the deposit may be fed to the spray gun 22 using any suitable means known in the art, such as modified thermal spray feeders. One custom designed feeder that may be used is manufactured by Powder Feed Dynamics of Cleveland, Ohio. This feeder has an auger type feed mechanism. Fluidized bed feeders and barrel roll feeders with an angular slit may also be used.

In the process of the present invention, the feeder may be pressurized with a gas selected from the group consisting of helium, nitrogen, another inert gas, and mixtures thereof. Feeder pressures are generally 15 psi (0.1 MPa) above the main gas or head pressures, which pressures are usually in the range of from 200 psi (1.38 MPa) to 500 psi (3.45 MPa), depending on the powder metal material composition.

The gas may be heated to keep it from rapidly cooling and freezing once it expands past the throat of nozzle 20. The net effect is a surface temperature on the component 100 of about 115 degrees Fahrenheit (46°C) during deposition. Any suitable means known in the art may be used to heat the gas.

To deposit the powdered metal material, the nozzle 20 may pass over the edge 106 of the component 100 being repaired on multiple occasions. The number of passes is a function of the thickness of the material to be applied. The process of the present invention is capable of forming a deposit having any desired thickness. Cold spray can produce thin layers ranging from 0.002 inches (0.051 mm) to 0.020 inches (0.51 mm) per single pass.

The main gas that is used to deposit the powdered metal particles onto the edge 106 may be pass through the nozzle 20 via inlet 30 at a flow rate of from 0.001 SCFM to 50 SCFM, preferably in the range of from 15 SCFM to 35 SCFM. The foregoing flow rates are preferred if helium is used as the main gas. If nitrogen is used by itself or in combination with helium as the main gas, the nitrogen may be passed through the nozzle 20 at a flow rate of from 0.001 SCFM to 30 SCFM, preferably from 4.0 SCFM to 30 SCFM more preferably from 4.0 SCFM to 8.0 SCFM.

The main gas temperature may be in the range of from 600 degrees Fahrenheit (316°C) to 1200 degrees Fahrenheit (649°C), preferably from 700 degrees Fahrenheit (371°C) to 1000 degrees Fahrenheit(538°C), and most preferably from 725 degrees Fahrenheit (385°C) to 900 degrees Fahrenheit (482°C). If desired, the main gas may be heated as high as approximately 1250 degrees Fahrenheit (677°C) depending on the material being deposited.

The pressure of the spray gun 22 may be in the range of from 200 psi (1.38 MPa) to 500 psi (3.45 MPa), preferably from 200 psi (1.38 MPa) to 400 psi (2.76 MPa), and most preferably from 275 psi (1.90 MPa) to 375 psi (2.59 MPa). The powdered metal material is preferably fed from a hopper, which is under a pressure of 10 to 50 psi (69 kPa to 344 kPa) higher than the specific main gas pressure, preferably 15 psi (103 kPa) higher, to the spray gun 22 via line 34 at a rate in the range of from 10 grams/min to 100 grams/min, preferably from 15 grams/min to 50 grams/min.

The powdered metal material is fed to the spray gun 22 using a non-oxidizing carrier gas. The carrier gas may be introduced via inlet 30 at a flow rate of from 0.001 SCFM to 50 SCFM, preferably from 8.0 SCFM to 15 SCFM. The foregoing flow rate is useful if helium is used as the carrier gas. If nitrogen by itself or mixed with helium is used as the carrier gas, a flow rate of from 0.001 SCFM to 30 SCFM, preferably from 4.0 to 10 SCFM, may be used.

The spray nozzle 20 is held at a distance from the edge 106. This distance is known as the spray distance and may be in the range of from 10 mm. to 50 mm.

The velocity of the powdered metal particles leaving the spray nozzle 20 may be in the range of from 825 m/s to 1400 m/s, preferably from 850 m/s to 1200 m/s.

One of the advantages of using cold spray to restore the dimensions of an edge 106 of a platform of a component used in a gas turbine engine is that the restoration can be accomplished without impacting the integrity of any fillet that may be present. This is because the cold spray process does not create a heat-affected zone.

FIG. 3 is a photograph of a cold spray build-up of an edge on a test specimen. The test specimen was a piece 200 of INCO 718 material having a thickness of about 0.125 inches (3.175 mm). The edge 200 of the specimen was sprayed using a cold spray process in accordance with the present invention to deposit INCO 718 material to build up the thickness of the edge by about 0.012 inches (0.305 mm). The powder which was sprayed on the test specimen was INCO 718 powder having a mean particle size of 15.67 microns with a standard deviation of about 5.6 microns. The particles were sprayed using helium as a main gas. The main gas pressure was 300 psi (2.09 MPa) and the main gas temperature was 878° Fahrenheit (470°C). The powder was supplied to the nozzle using a helium carrier gas at a pressure of 315 psi (2.17 MPa) at a rate of 20 grams per minute. The spray nozzle had a stand-off distance of 1 inch (25.4 mm). The thickness of the deposit per pass was about 0.002 inches (0.051 mm). The deposit was made in a total of 6 passes. The deposit was 97% dense.

In some instances, it may be necessary to subject a component which has been restored to a heat treatment for improving the ductility and/or wear resistance of the deposited material. In such instances, any suitable heat treatment known in the art may be used including, but not limited to, global and local heat treatments.

While the present invention has been discussed in connection with the build up of a platform edge on a blade used in a gas turbine engine, it should be recognized that the process of the present invention could be used to restore or repair edge surfaces on other types of components.

The cold spray process offers many advantages over other metallization processes. Since the powders are not heated to high temperatures, no oxidation, decomposition, or other degradation of the feedstock materials occurs. Powder oxidation during deposition is also controlled since the particles are contained within the oxygen-free accelerating gas stream. Other potential advantages include the formation of compressive residual surface stresses and retaining the microstructure of the feedstock. Also, because relatively low temperatures are used, thermal distortion of the substrate will be minimized. Because the feedstock is not melted, cold spray offers the ability to deposit materials that cannot be sprayed conventionally due to the formation of brittle intermetallics or a propensity to crack upon cooling or during subsequent heat treatments.

## Claims

1. A process for restoring an edge portion (106) of a component (100) comprising the steps of:
providing a component (100) having a worn edge (106); and
depositing at least one layer of powder metal material onto said worn edge using a non-oxidizing carrier gas so that said powder metal material plastically deforms without melting and bonds to said worn edge (106) upon impact with said worn edge (106) .

2. The process according to claim 1, wherein said component (100) is a component used in an engine and having an airfoil portion (102) and a platform (104) with said worn edge (106).

3. The process according to claim 2, wherein said depositing step comprises depositing at least one layer of a powder metal material having a composition identical to a composition of a material from which said platform (104) is formed.

4. The process according to claim 2, wherein said depositing step comprises depositing at least one layer of a powder metal material having a composition which provides improved wear and/or ductility that is compatible with a material from which said platform (104) is formed.

5. The process according to claim 2, 3 or 4, wherein said component (100) has a fillet and said depositing step is performed without impacting the integrity of said fillet.

6. The process according to any preceding claim, wherein said depositing step comprises depositing multiple layers of said powder metal material onto said worn edge (106).

7. The process according to any preceding claim, further comprising removing defects in said worn edge (106) prior to said depositing step.

8. The process according to any preceding claim, further comprising subjecting said material deposited onto said edge (106) to a heat treatment for improving ductility.

9. The process according to claim 1, wherein said depositing step comprises providing said powder metal material in particle form having a particle size in the range of from 5 microns to 50 microns and accelerating said particles to a speed in the range of from 825 m/s to 1400 m/s and wherein said depositing step further comprises feeding said powder metal to a spray nozzle at a feed rate of from 10 grams/min to 100 grams/min using a carrier gas selected from the group consisting of helium, nitrogen, another inert gas, and mixtures thereof.

10. The process according to claim 9, wherein said accelerating step comprises accelerating said particles to a speed in the range of from 850 m/s to 1200 m/s.

11. The process according to claim 9 or 10, wherein said feeding step comprises feeding said metal powder to said spray nozzle at a feed rate of from 15 grams/min to 50 grams/min.

12. The process according to claim 9, 10 or 11, wherein said carrier gas is helium and said feeding step comprises feeding helium to said nozzle at a flow rate of from 0.001 SCFM to 50 SCFM.

13. The process according to claim 12, wherein said feeding step comprises feeding said helium to said nozzle at a flow rate in the range of from 8.0 SCFM to 15 SCFM.

14. The process according to claim 9, 10 or 11, wherein said carrier gas comprises nitrogen and said feeding step comprises feeding said nitrogen to said nozzle at a flow rate of from 0.001 SCFM to 30 SCFM.

15. The process according to claim 14, wherein said feeding step comprises feeding said nitrogen to said nozzle at a flow rate of from 4.0 SCFM to 10 SCFM.

16. The process according to any of claims 9 to 15, wherein said depositing step comprises passing said metal powder particles through said nozzle using a main gas selected from the group consisting of helium, nitrogen, another inert gas, and mixtures thereof at a main gas temperature in the range of from 600 degrees Fahrenheit (316°C) to 1200 degrees Fahrenheit (649°C) and at a spray pressure in the range of from 200 psi (1.38 MPa) to 500 psi (3.45 MPa).

17. The process according to claim 16, wherein said passing step comprising passing said metal powder particles through said nozzle at a main gas temperature in the range of from 700 degrees Fahrenheit (371°C) to 1000 degrees Fahrenheit (538°C) at a spray pressure in the range of from 200 psi (1.38 MPa) to 400 psi (2.76 MPa).

18. The process according to claim 16, wherein said main gas temperature is in the range of from 725 degrees Fahrenheit (385°C) to 900 degrees Fahrenheit (482°C) at a spray pressure in the range of from 275 psi (1.90 MPa) to 375 psi (2.59 MPa).

19. The process according to claim 16, 17 or 18, wherein said main gas comprises helium and said passing step comprises feeding said helium to said nozzle at a flow rate in the range of from 0.001 SCFM to 50 SCFM.

20. The process according to claim 19, wherein said helium feeding step comprises feeding said helium to said nozzle at a flow rate in the range of from 15 SCFM to 35 SCFM.

21. The process according to claim 16, 17 or 18, wherein said main gas comprises nitrogen and said passing step comprises feeding said nitrogen to said nozzle at a feed rate in the range of from 0.001 SCFM to 30 SCFM.

22. The process according to claim 21, wherein said nitrogen feeding step comprises feeding said nitrogen to said nozzle at a feed rate in the range of from 4.0 to 30.0 SCFM.

23. The process according to claim 21, wherein said nitrogen feeding step comprises feeding said nitrogen to said nozzle at a feed rate in the range of from 4.0 to 8.0 SCFM.
